(19) Europäisches Patentamt
European Patent Office
Office européen des brevets

(11) **EP 4 687 249 A1**

(12) **EUROPEAN PATENT APPLICATION**

(43) Date of publication:
**04.02.2026 Bulletin 2026/06**

(21) Application number: **24217141.1**

(22) Date of filing: **03.12.2024**

(51) International Patent Classification (IPC):
*H02J 3/01* (2026.01)  *H02J 3/12* (2026.01)
*H02J 3/18* (2026.01)  *H02M 5/40* (2006.01)

(52) Cooperative Patent Classification (CPC):
**H02J 3/1821; H02J 3/01; H02J 3/1807;**
H02J 3/1814; H02M 5/42

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2024 PT 2024119640**

(71) Applicant: **Efacec Energia - Máquinas e Equipamentos Eléctricos S.A.**
**4465-587 Matosinhos (PT)**

(72) Inventors:
• **PORTUGAL DE SENA LOPES, Afonso Gil**
**4465-587 LEÇA DO BALIO (PT)**
• **COUTO AZEVEDO COSTA, Luis Filipe**
**4465-587 LEÇA DO BALIO (PT)**
• **COSTA, Nuno Francisco**
**4465-587 LEÇA DO BALIO (PT)**
• **PINHEIRO ALMEIDA, Simao Pedro**
**4465-587 LEÇA DO BALIO (PT)**

(74) Representative: **Patentree**
**Edificio Net**
**Rua de Salazares, 842**
**4149-002 Porto (PT)**

(54) **DYNAMIC VOLTAGE REGULATOR FOR LOW-VOLTAGE NETWORK AND RESPECTIVE STARTUP AND SHUTDOWN METHODS**

(57) This disclosure refers to a Dynamic Voltage Regulator (DVR) and its methods of operation, including startup and shutdown method, for series connection in a low-voltage network to inject a voltage compensation to restore the voltage in the low-voltage network load to one or more predetermined values , wherein the regulator comprises: a series transformer with a primary for power injection and a secondary for series connection to the low-voltage network; a DC bus; an AC-DC converter, or so-called shunt converter, connected between the low-voltage network and the DC bus, to convert AC from the low-voltage network to DC on the DC bus; a DC-AC converter, or so-called series converter, connected between the DC bus and the primary of the series transformer integrated in the DVR, to convert DC from the DC bus to AC in the primary of the series transformer.

Fig.3

**Description**

**TECHNICAL FIELD**

This description relates to a Dynamic Voltage Regulator (DVR) and its respective startup and shutdown methods. It also refers to the operation and elements that constitute said DVR. A control method for said DVR is also described.

**BACKGROUND**

Problems with the electrical power quality cause degradation in service quality and result in losses for both the electricity network service provider as well as for the consumers [1].

Voltage sags - A voltage sag is defined as a sudden decrease in the effective value of the supply voltage to a value comprised between 90% and 5% of the nominal or declared voltage, followed by its restoration after a short time period. According to the NP EN 50160:2010 standard, the duration of voltage sags is comprised between 10 milliseconds and 1 minute.
Overvoltages - Overvoltages are characterized by a significant increase in voltage over a certain time period. Generally, they can be classified as low-frequency overvoltages when they occur at the electric system frequency (50 Hz) or as high-frequency overvoltages when they occur at much higher frequencies, potentially reaching the megahertz range.
Voltage flickers - Voltage flickers can be defined as cyclic variations in voltage or as relatively rapid and random series of variations, typically between 90% and 110% of the nominal voltage. Frequency oscillations - The frequency of alternating voltage is a function of the rotational speed of generators. Frequency stability depends on ensuring a balance between active power absorption and generation. In strongly interconnected networks, frequency variations are practically insignificant due to the network's response capacity to load variations.
Voltage unbalance - In situations where the voltages of a three-phase system have different amplitudes or asymmetric phase shifts, different from 120°, the system is considered unbalanced or asymmetric.
Harmonic distortion - Generally speaking, harmonics are sinusoidal voltages or currents with frequencies that are integer multiples of the fundamental component (50 Hz), which characterize the harmonic distortion of voltage or current at a given point in the electrical system. Harmonics are classified by order, frequency, and sequence.

One of the approaches to mitigate the Electrical Power Quality (EPQ) related problems is to install a power equipment capable of suppressing or mitigating the effect of disturbances. There are a variety of equipment aimed at improving EPQ, among which the following stand out:

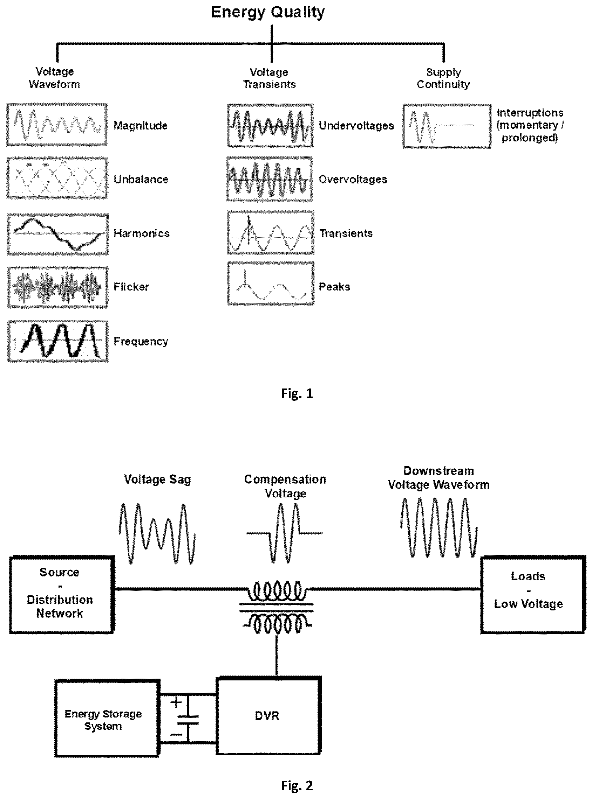

Uninterruptible power supplies (UPS) - a solution with two conversion stages to mitigate network quality problems as illustrated in **Fig. 2.**
Grid Inverters (SSTs) - a solution equipped with two distinct power grids, switching to the power grid without failure in the event of disturbances.
Dynamic voltage regulator (DVR) - a solution with an equipment connected in series to the low-voltage network, which corrects/mitigates network disturbances and restores voltage quality to the load.

US5469044A discloses a bias voltage vectorially added to the controllable voltage injected in series with the line voltage of a transmission/distribution line reducing the MVA rating required for a unified power flow controller (UPFC) in applications where the power in the transmission line only flows in a single direction, or where the amplitude of the transmission angle is unequal to zero.
It is also important to mention that, in addition to the scenarios mentioned above, the problem of voltage drops in weak networks and with radial configuration is typically addressed by using on-load and off-load tap-changers in the power transformers within the grid. Also, for this application, the DVR described here presents itself as a solution of greater efficiency, having no limit number of manoeuvres like a mechanical element, allowing dynamic regulation throughout the entire range and not by predefined steps and also allowing a distinct regulation per phase.
These facts are described in order to illustrate the technical problem solved by the embodiments of this document.

**GENERAL DESCRIPTION**

Electrical power quality (EPQ) is an important factor that characterizes an electrical power distribution system. Problems related to electrical power quality (EPQ) can be categorized by waveform quality, network disturbances, and stability/continuity, as illustrated in **Figure 1.**

Table 1 provides a comparative analysis of the three solutions presented.

Table 1 - Comparison between three solutions for protecting critical loads against network disturbances:

|  | | Advantages | Disadvantages |
|---|---|---|---|
| UPS | | Can compensate power outages | High cost/kW<br>High losses |
| DVR | | Low losses<br>Compensation range limited to a defined voltage range<br>Overall efficiency | Protection scheme is complex<br>It does not compensate in case of power outages |
| SST | | Low losses in standby mode<br>Low-cost solution in case an independent second power grid is available<br>Can compensate in case of power outages and/or voltage sags | Dynamic response time<br>Needs a stable second distribution network<br>Low response time |

Dynamic Voltage Regulators (DVR) are considered to be an effective and efficient solution to mitigate the impact of disturbances on grid voltage for supplying critical loads. It also has the ability to compensate for reactive energy or attenuate voltage harmonics.

A *Dynamic Voltage Regulator* (DVR) for series connection in a low-voltage alternating current AC network is described, to inject additional voltage to regulate the voltage in a low-voltage network load to one or more predetermined values, wherein the regulator comprises:

a series transformer with a primary for energy injection and a secondary for series connection between the low-voltage network and said load where the voltage regulation is intended;
a DC bus, direct current;
an AC-DC converter, or so-called shunt converter, connected between the low-voltage network and the DC bus, to convert AC from the low-voltage network to DC on the DC bus;
a DC-AC converter, or so-called series converter, connected between the DC bus and the transformer primary, to convert DC from the DC bus to AC in the primary of the series transformer.

A preferred embodiment comprises a Computer Processor, configured to switch between the following operating states:

an active state, wherein the AC-DC converter and the DC-AC converter are active, and wherein the voltage in the low-voltage network load is regulated to the one or more predetermined values;
a standby state, wherein the AC-DC converter is active and the DC-AC converter is deactivated, and wherein the voltage in the low-voltage network load is not regulated.

In a preferred embodiment, the computer processor is configured to switch between the following operating states:

an active state, wherein the AC-DC converter and the DC-AC converter are active, and wherein the voltage of the low-voltage network is regulated to the one or more predetermined values;
a standby state, wherein the AC-DC converter is active and the DC-AC converter is deactivated, and wherein the voltage in the low-voltage network load is not regulated to the one or more predetermined values;
an off state, wherein the AC-DC converter and DC-AC converter are deactivated, and wherein the voltage in the low-voltage network load is not regulated.

A preferred embodiment comprises a NC short-circuit contactor in the primary of the series transformer, electronically controlled, more in particular wherein the NC short-circuit contactor is a mechanical contactor.

A preferred embodiment comprises a switch, electronically controlled, configured to make a bypass to the transformer and converters of the regulator, in particular to establish an alternative electrical circuit for the current flow from the low-voltage network to the low-voltage network load, more in particular wherein the switch is a mechanical contactor.

In a preferred embodiment, the computer processor is configured to switch between the following operating states:

an active state, wherein the AC-DC converter and the DC-AC converter are active, and wherein the voltage of the low-voltage network load is regulated;

a standby state, wherein the AC-DC converter is active and the DC-AC converter is deactivated, and wherein the voltage of the low-voltage network load is not regulated;

a bypass state, wherein the switch activates a bypass to the transformer and regulator converters, and the readiness state and the bypass state can occur simultaneously; and

optionally, an off state, wherein the AC-DC converter and DC-AC converter are deactivated, and wherein the voltage of the low-voltage network load is not regulated, and the off state and the bypass state can occur simultaneously.

A preferred embodiment comprises one or more capacitors for energy storage connected to the DC bus; and a preload circuit for preloading the one or more capacitors by the AC-DC converter.

In a preferred embodiment, the AC-DC converter is additionally configured to regulate the reactive power in the low-voltage network load and/or to regulate voltage harmonics in the low-voltage network load.

In a preferred embodiment, the series transformer is an injection transformer with galvanic isolation for the distribution network.

In a preferred embodiment, the predetermined values of the voltage of the low-voltage network include one or more of: amplitude, frequency and phase of the voltage.

A preferred embodiment comprises a computer processor, configured to initiate the regulation of the voltage in the low-voltage network load, through the steps of:

measuring the value and phase of the current in the low-voltage network load;

activating and adjusting the DC-AC converter for current control on the secondary of the series transformer to the current measured in the low-voltage network load, particularly in a gradual manner;

when the current of the DC-AC converter stabilizes, adjusting the DC-AC converter for additionally voltage control to a zero voltage in the primary of the series transformer;

setting the DC-AC converter in voltage control mode to the desired voltage on the secondary of the series transformer to regulate the voltage in the low-voltage network load.

A preferred embodiment comprises a computer processor, configured to initiate voltage regulation in the low-voltage network load,

wherein the NC short-circuit contactor on the primary of the series transformer, if any, is previously closed,

through the steps of:

measuring the value and phase of the current in the low-voltage network load;

optionally, checking that the voltage measured in the low-voltage network is within a predetermined range and only proceed if the voltage is within that range, in particular a range of $0.85 \text{ pu} \leq Us \leq 1.15 \text{ pu}$, wherein 1 pu corresponds to the nominal voltage of the low-voltage network and Us is the measured voltage of the low-voltage network;

activating and adjusting the DC-AC converter for current control on the secondary of the series transformer to the current measured in the low-voltage network load, particularly in a gradual manner;

when the current of the DC-AC converter stabilizes, adjusting the DC-AC converter for additionally voltage control to a zero voltage in the primary of the series transformer;

opening the NC short-circuit contactor on the primary of the series transformer, if present;

setting the DC-AC converter in voltage control to the desired voltage on the secondary of the series transformer to regulate the voltage in the low-voltage network load.

A preferred embodiment comprises a computer processor configured to stop the regulation of the voltage in the low-voltage network load, through the steps of:

setting the DC-AC converter for voltage control to a zero voltage on the primary of the series transformer;

measuring the value and phase of the current in the low-voltage network load;

adjusting the DC-AC converter for current control on the secondary of the series transformer to the current measured in the low-voltage network load;

adjusting the DC-AC converter for current control on the secondary of the series transformer to a zero current, particularly in a gradual manner.

A preferred embodiment comprises a computer processor configured to stop voltage regulation in the low-voltage network load,

wherein the NC short-circuit contactor on the primary of the series transformer, if any, is previously open, through the steps of:

setting the DC-AC converter for voltage control to a zero voltage on the primary of the series transformer;
measuring the value and phase of the current in the low-voltage network load;
adjusting the DC-AC converter for current control on the secondary of the series transformer to the current measured in the low-voltage network load;
when the DC-AC converter current stabilizes, closing the NC short-circuit contactor on the primary of the series transformer, if present;
adjusting the DC-AC converter for current control on the secondary of the series transformer to a zero current, particularly in a gradual manner.

A preferred embodiment comprises a computer processor configured to:

monitoring the voltage of the low-voltage network;
if it detects a voltage deviation condition in any of the phases compared to a predefined value for that phase, including under- or over-voltage scenarios compared to the reference value set for each phase, activating voltage regulation by the dynamic voltage regulator in response to the detection of the voltage deviation condition;
injecting a compensatory voltage in series with the low-voltage network to correct the voltage deviation condition in the low-voltage network load; and
monitoring the compensated voltage on a dynamic voltage regulator output to ensure that the output voltage is at the set reference value and within acceptable accuracy limits.

In a preferred embodiment, the DVR is configured to be connected in series between the power transformer of the low-voltage network and the Low-Voltage Distribution Board (LVDB) of the distribution transformer station of the low-voltage network load, thus ensuring the circulation of the entire load current through the DVR, that is, the series transformer and series converter.

It is also described a method for starting a dynamic voltage regulator of any of the described embodiments, which comprises a computer processor, configured to start the regulation of the voltage in the low-voltage network load to the one or more predetermined values, through:

measuring the value and phase of the current in the low-voltage network load;
optionally, checking that the voltage measured in the low-voltage network is within a predetermined range and only proceed if the voltage is within that range, in particular a range of $0.85\,pu \leq Us \leq 1.15\,pu$, wherein 1 pu corresponds to the nominal voltage of the low-voltage network and Us is the measured voltage of the low-voltage network;
activating and adjusting the DC-AC converter for current control on the secondary of the series transformer to the current measured in the low-voltage network load, particularly in a gradual manner;
when the current of the DC-AC converter stabilizes, adjusting the DC-AC converter for additionally voltage control to a zero voltage in the primary of the series transformer;
opening the NC short-circuit contactor on the primary of the series transformer, if present;
setting the DC-AC converter in voltage control to the desired voltage on the secondary of the series transformer to regulate the voltage in the low-voltage network load.

The following information is for the description of the DVR equipment. The DVR is a piece of equipment connected in series to the low-voltage network that injects additional voltage in order to regulate the voltage on the load side so that the desired waveform and amplitude can be obtained, per phase, within the values defined by the EN-50160 standard, even when the input voltage is unbalanced or distorted as illustrated in **Figure 2.**

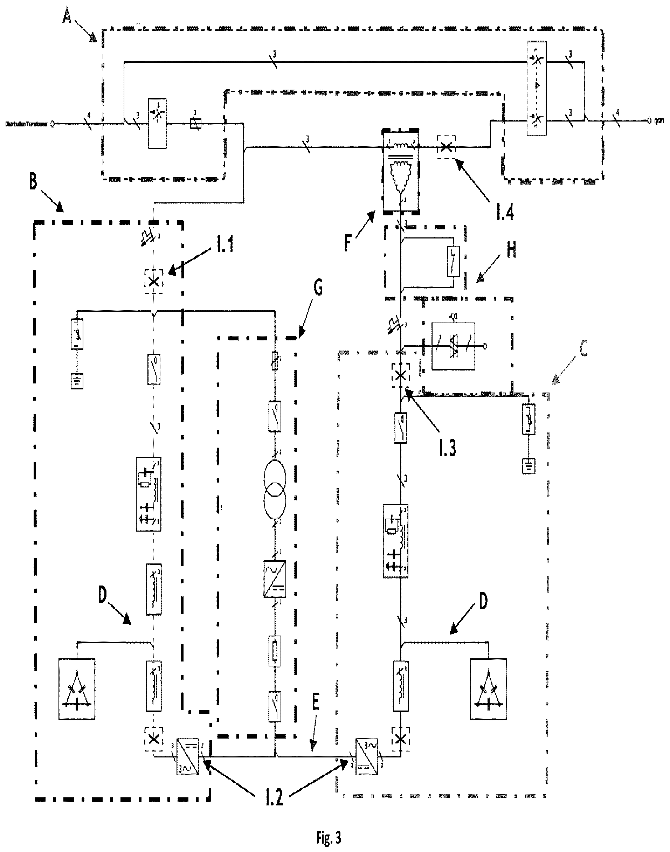

Briefly, the elements that make up a DVR, illustrated in **Figure 3,** are the following:

[A] - **Bypass circuit** - During failures or in the event that the current is too high for the DVR to conduct, it is necessary to provide an alternative circuit path for the current circulation until the current is reduced to a level supported by the DVR;
[B] - **Shunt Converter** - A type of voltage source converter (VSC) is applied, responsible for the DC bus voltage control and regulation, ensuring a controlled source to the series converter module. In addition, it is also the module responsible for complying with the reactive power compensation;
[C] - **Series Converter** - A type of voltage source converter (VSC) is applied, which injects AC voltage through the PWM modulation of the direct voltage bus, thus being the module responsible for regulating the voltage on the load side so that the desired waveform and amplitude can be obtained by means of an operational reference.

In addition, it is also the module responsible for the compensation/attenuation of voltage harmonics;

[D] - **LC & LCL filter** (passive line filter)- Necessary for the correct operation of the converter modules, allowing the attenuation of the switching harmonics, typically assuming the LCL topology allowing greater attenuation with smaller inductive components;

[E] - **Direct voltage bus** - Intermediate bus in direct voltage, regulated to approximately 700 Vc.c. by the shunt converter module, ensuring a controlled source to the series converter module;

[F] - **Series** / **injection transformer** - In most applications, the DVR is equipped with injection transformers that provide galvanic isolation to the distribution network;

[G] - **Pre-Load Circuit** - Responsible for enabling the pre-load of the DC bus (capacitors), in a controlled manner and through the AC network. Process controlled by the shunt module unit during the startup process;

[H] - **Disconnection** / **Protection Equipment** - Circuit responsible for ensuring the continuity of service in the supply of the load in the event of controlled and/or untimely disconnection of the DVR, enabling the rapid establishment of the short-circuit of the primary of the series transformer and, thus, establishing the automatic bypass circuit for the continuous circulation of current to the load;

[I] - **Measurement Points** - Necessary for control and measurement:

[I.1] - Upstream Network Measurement - Voltage and current measurement point at the input of the DVR allowing the acquisition of the voltage values of the upstream distribution network, necessary for synchronization with the network, as well as the voltage regulation grids of the downstream network. In addition, it allows closed-loop control of Reactive Power injection;

[I.2] - DC Bus Measurement - Voltage and current measurement point on the DC intermediate bus, necessary for the control of this bus by the shunt converter and thus ensure the SW and HW protection procedures internal to the DVR and the establishment of a controlled source for the series converter;

[I.3] - Measurement of the Output of the Mod. Series Converter - Voltage and current measurement point at the output of the series converter module, pre and post passive LC filter, necessary for the regulation of the series converter and, subsequently, for the regulation of the output voltage and current;

[I.4] - Downstream Network Measurement (LV - LVDB network) - Voltage and current measurement point at the output of the DVR allowing the acquisition of the voltage and current values of the downstream distribution network, necessary for synchronization with the network, as well as the network voltage regulation meshes in a controlled manner and without interruptions of service to the loads present in that network.

The following information refers to the DVR's general operating modes. Briefly, the control system of a DVR consists of 5 different operating states:

Active - The DVR is in VCM ("*Voltage Control Mode*") characterized by the injection of compensating voltage, per phase, in order to mitigate the over- or under-voltage measured to the defined value. In this operational scenario, both modules are interconnected to the LV network and in operation;

Standby - Based on the detection that the voltage of the source (upstream network) is within the normal operating regime and, consequently, the DVR compensation is considered null, a partial stop command can be issued to the DVR, imposing the controlled shutdown of the series converter module, thus minimizing the total switching losses of the equipment, with only the shunt module remaining in operation. Keeping the shunt module in operation ensures a shorter time when the DVR is put into service for voltage regulation, as well as maintaining the system's capacity to regulate Reactive Power;

Error / Alarm - Based on the detection of transient or permanent phenomena that trigger the action of the protections by SW and/or HW, thus considering the detection of adverse conditions, overload or exceeding the maximum limits allowed for the normal operation of the equipment, the DVR will enter in alarm state, ensuring the protection of the corresponding converter modules and also ensuring the electrical isolation (sectioning) between these and the network. It is also important to underline that, subsequently, the automatic reset processes of the DVR are triggered;

Off - DVR completely out of service by local or remote command from the equipment/system operator, ensuring electrical isolation between the converter modules and the network;

Bypass - Mechanical circuit, manoeuvrable locally, which enables the establishment of an alternative electrical circuit for current flow to the loads (to the General Low-Voltage Distribution Board, LVDB).
The establishment of this circuit ensures the complete electrical isolation of the DVR panel. It is typically used for extended maintenance processes on the DVR or complete decommissioning of this equipment.

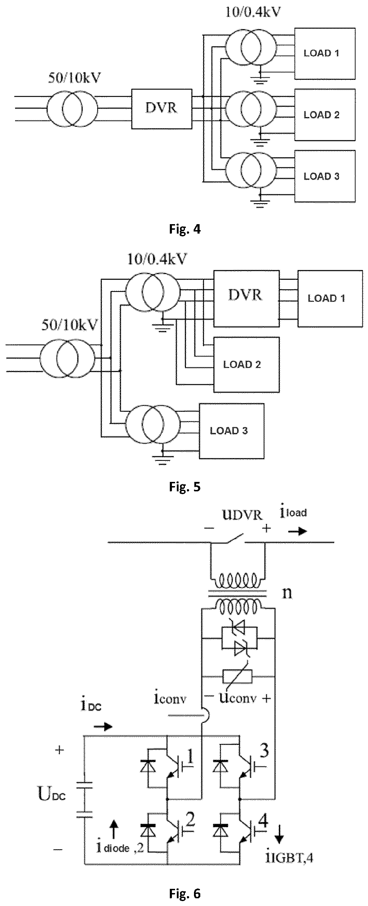

In terms of the location/application of a DVR, it can be installed at the level of the transformer stations of the distribution network as illustrated in **Figure 4** or, as illustrated in **Figure 5,** close to the low-voltage customer.
It is important to underline that:

The optional existence of the Bypass panel as an external element to the DVR and not part of it, allows greater flexibility in the installation of this equipment, enabling operation and commissioning manoeuvres phased in time and also allows deep intervention and maintenance on the DVR 'out of voltage' without the need for service interruption to the loads;

As identified in **Figure 4** and **Figure 5,** the DVR is not preferably integrated into the power transformer, but rather coupled to it. This allows the reinforcement of the capabilities of existing installations/systems without the need to replace the transformer. In addition, given the proposed topology, a higher degree of reliability of the system is ensured because even in the event of catastrophic failure of the DVR equipment and consequent need for decommissioning, replacement or deep intervention, the continuity of service to the loads is ensured.

There are advantages to the application of a DVR in low-voltage:

The DVR can be better targeted for powering critical loads.
Most consumers only have access to the low-voltage network and the DVR application can be placed at the level of the consumer or at the level of the low-voltage distribution transformer station.
The short circuit power is lower and the DVR protection circuit is easier to design.

The disadvantages of applying a DVR in low-voltage are:

It can introduce greater distortion or variation in the load voltage, as the introduction of the DVR increases the impedance of the circuit.
Voltage sags with homopolar sequence can occur, and in order to compensate for connected loads between phase and neutral adequately, both the DVR conversion topology and the control must be able to generate voltages in the forward, inverse and homopolar symmetric components.

The purpose of this disclosure is to present a way to increase the stability of the low-voltage network without modifications or extensive constructions, with flexibility and reliability.

**BRIEF DESCRIPTION OF THE DRAWINGS**

For an easier understanding, figures are herein attached, which represent preferred embodiments that do not intend to limit the object of this description.

**Figure 1:** Schematic representation of a diagram related to the electrical power quality.

**Figure 2:** Schematic representation of the elements that constitute a preferred embodiment of a DVR described.

**Figure 3:** Representation of a preferred embodiment of a single-line diagram of the DVR described.

**Figure 4:** Representation of a preferred embodiment of the location of a DVR in the medium voltage distribution system.

**Figure 5:** Representation of a preferred embodiment showing the location of a DVR in the low-voltage distribution system.

**Figure 6:** Representation of a preferred embodiment of the DVR with a proposed example of a protection circuit represented for one phase.

**Figure 7:** Representation of a preferred embodiment of a state machine in the DVR startup sequence.

**Figure 8:** Representation of an experimental embodiment of the DVR state machine in the shutdown sequence.

**Figure 9:** Representation of dq references calculation for DVR startup sequence.

**Figure 10:** Preferred startup sequence of the DVR series converter.

**Figure 11:** Preferred shutdown sequence of the DVR series converter.

**Figure 12:** Schematic of the experimental setup carried out for the DVR electronic voltage regulator.

**Figure 13:** Preferred startup sequence with non-linear load supply: a) current regulation for Network Analyzer references; b) load voltage with current control operating mode with the NC contactor open; c) switch to voltage control mode; d) permanent regime in voltage control.

**Figure 14:** Preferred shutdown sequence of the DVR with non-linear load supply: a) voltage control pass-through to zero compensation; b) closing moment of the NC contactor.

**DETAILED DESCRIPTION**

This description concerns a Dynamic *Voltage* Regulator (DVR) and its startup and shutdown methods. This disclosure also refers to the controlled startup and shutdown method of said DVR.
The following information refers to the DVR protection circuit.
As this is one of the circuits with effective and relevant performance in the processes of entry and exit of controlled operation of the DVR described in this document, we believe it is important, prior to detailing these processes, to provide a more detailed overview of the same.
Thus, since the DVR is an equipment connected in series between the power transformer and the LVDB of the distribution transformer station, if there is a current failure in the load, the fault current will circulate through the DVR, that is, through the series transformer and series converter. The components of the series converter are usually designed for the nominal current of the system, so it is preferable to apply a bypass circuit, which at the same time measures the amplitude of the current and which comes into operation in case the current is too high for the converter to withstand. In this way, a parallel bypass circuit is established that prevents the fault current from circulating through the components of the series converter. The same principle is valid for the DVR operation shutdown, where it is preferable to enforce a bypass circuit that establishes a permanent path for the current between the distribution transformer and the loads in the event that the DVR is out of service.
The performance of the DVR protections aims to protect the circuits themselves, but also to ensure that there is no interruption in the power supply to the loads. This is preferably done through the bypass circuit designing a robust parallel path for the circulation of current to the loads as described.
Figure 3 represents a single-line diagram of the DVR described wherein A is represented, B is represented.
Regardless of the origin of the fault current (internal to the DVR or originating from a downstream fault in the distribution network), this current is preferably detected by the DVR protection circuit (by SW and HW) leading to the electrical isolation of the equipment relative to the electrical network by means of circuit H in Figure 3 and Figure 6, ensuring continuity of service for the load after the fault and preventing damage to the DVR.
Additionally, like the LVDB, it is preferably considered protection by means of fuses at the entrance of the bypass cabinet, thus ensuring protection against overloads and short circuits on the network side that may cause damage to the equipment and/or installation.
**Figure 6** illustrates the example proposed for a bypass circuit for DVR, which consists of the application of antiparallel thyristors in the low-voltage winding of the series transformer in parallel with varistors that ensure the current flow instead of the series converter until the contactor circuit is activated in order to establish the bypass circuit permanently.
The elements that participate in the DVR protection circuit can be described by:

Injection transformer (series): The series transformer can play an active role in protecting the DVR, as it is possible to take advantage of the transformer ratio and also the current saturation of the transformer.

Thyristors: Antiparallel thyristors can be activated quickly to circulate the current transferred to the transformer.

Mechanical bypass by contactors: The activation of contactors is relatively slow, but it is a robust solution, easy to control and equally effective when applied in a coordinated way with complementary means (e.g. thyristors). The figure illustrates the placement of the contactor in the transformer's high-voltage winding, which when closed, produces a very small voltage drop.

Varistors: they are a protective element against voltage spikes in the DVR and not to conduct current continuously.

In the event of loss of connection to the grid, or in the event that the grid voltage values are outside the permissible range for low-voltage networks (permissible range: 0.85 pu ≤ Us ≤ 1.15 pu), the DVR shall stop injecting compensation voltage. In this case, the DVR should enter bypass operating mode. Actuation/compensation in a higher voltage range requires the DVR to be oversized for that voltage range.

In an embodiment, the DVR has an HMI interface where all the DVR operating status information is available, in particular for the series and shunt converter modules and the bypass circuit. It is possible to verify the establishment of the internal bypass circuit, either by stop command by the operator, or by activation of the internal protections.

In an embodiment, the bypass circuit allows the current flow to the load, establishes a direct path for the current. In this way, the load protections are guaranteed by the system present in the transformer station, namely, by the LVDB and respective protections for distribution.

In an embodiment, there are no restrictions on the use of the bypass circuit, as the NC contactor guarantees, whenever the DVR is out of service, the circuit for the current flow to the load. The frequent entry and exit of the bypass circuit causes wear and tear due to the number of manoeuvres and cycles imposed, as with any other equipment, this situation must be taken care of in the regular service of checking and maintaining the equipment.

In addition to the DVR's local monitoring and control interface (HMI), this equipment has a communication interface, through the Modbus TCP/IP protocol, which enables its integration into a remote monitoring and dispatch system. In this way, it is possible to remotely monitor and recognize its operating status and operational references, such as whether it is in bypass or in regulation and on which reference the regulation is being made.

The information presented below refers to the control method proposed for the DVR. This disclosure provides a detailed description of the control method proposed, in particular, under this document, for the following procedures:

DVR startup and shutdown sequence. Since the DVR equipment is an element connected in series with the network, the entry into operation of the DVR and also the withdrawal of operation require some care in order to ensure the continuity of service for the loads. To do this, it is necessary to ensure a correct switching sequence of the bypass equipment and the series converter so as not to interrupt the flow of current to the load.

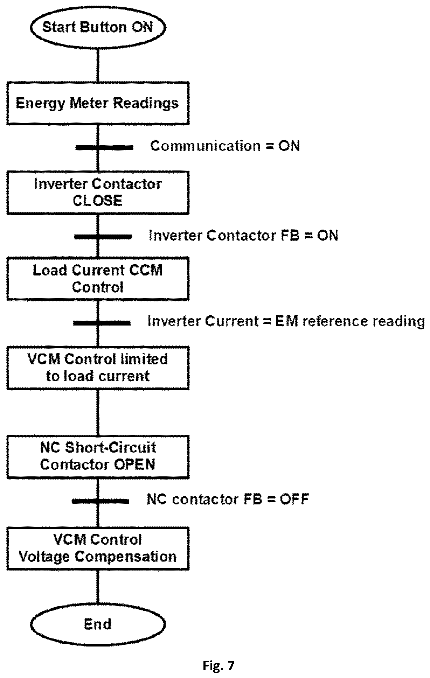

**Figure 7** illustrates the DVR startup sequence. The startup sequence first requires the establishment of communications with the Energy Meter corresponding to the measurement point I.4 (**Figure 3**). The purpose of communications with the Energy Meter is to allow the DVR to acknowledge the current value and the angle that it will have to circulate on the primary winding side of the internal series transformer. Once communication with the Energy Meter has been validated and the load references have been obtained to maintain service continuity, the startup sequence is followed. From the closed-state feedback of the series converter's interface contactor, the converter's PWM pulses are put into operation, with operation in CCM current control mode, wherein the current is regulated to the current level previously measured and calculated from the Energy Meter data. The "transfer" of the current circulating in the Bypass circuit (short circuit contactor) to the series converter in CCM mode is done in a controlled and ramped manner, thus ensuring a controlled/smooth transfer and greater safety in this process. When the converter current stabilizes at the desired reference, it is switched to the VCM voltage control mode with voltage reference for zero compensation so that, when the NC contactor is opened, the series converter is already in voltage regulation and tracking the load current. After entering this operating mode, the command to open the NC contactor is given. From the open feedback of the NC contactor, the transition to the VCM voltage control mode is carried out following the references imposed for voltage regulation in the loads - at the DVR output.

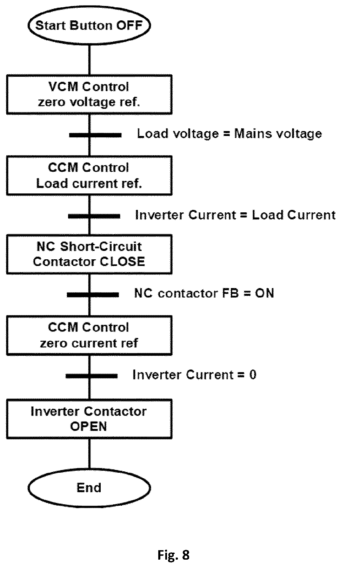

The shutdown sequence is illustrated in **Figure 8.** The series converter shutdown sequence is initiated by switching to the VCM voltage control mode with zero-compensation references, characterized by the load voltage being equal to the mains voltage. Once the necessary current references have been calculated for continuous load supply, the switch is made to the CCM current control mode. After a period of stabilization in CCM mode, the order to close the NC contactor is given. From the feedback of the closed state of the NC contactor, the converter's current reference to 0A is then imposed, that is, transferring the entire current circulation to the NC contactor, being equally controlled and ramped, thus ensuring a controlled transfer and greater stability in the process. Once the zero current in the converter is reached, the interface contactor to the converter mains is opened and the PWM switching is turned off.

It is important to mention here that simultaneously with the closing order of the NC contactor (short circuit contactor) the switching order to the thyristor bridge is given, thus ensuring the establishment of the Bypass circuit quickly, thus mitigating the impact that the mechanical actuation time of the relay chain for the order to the contactor, added to the manoeuvring time of the contactor itself, may have in any transient phenomena. The thyristor bridge will cease to operate as soon as the NC contactor has established the bypass circuit (effectively transitions to the closed position).

The information shown below refers to the calculation of current references from the Energy Meter.

Connected energy metering equipment on the load side shall be used to obtain information about the load, which shall provide at least the following information in real-time:

RST Phase RMS Currents
Active and Reactive Load Power

Power Factor

From this information and together with the information of the phase angle obtained by the Q/P ratio, the calculation of the circulation current in the primary winding of the transformer is carried out. The equations describing the load currents from the data transmitted by the Energy Meter are given by:

$$\varphi = \tan^{-1}\left(\frac{Q}{P}\right)$$

$$I_{load\_r} = \sqrt{2} \times I_{load\_r\_RMS} \times \sin(\omega t - \varphi)$$

$$I_{load\_s} = \sqrt{2} \times I_{load\_s\_RMS} \times \sin\left(\omega t - \varphi - \frac{2\pi}{3}\right)$$

$$I_{load\_t} = \sqrt{2} \times I_{load\_t\_RMS} \times \sin\left(\omega t - \varphi + \frac{2\pi}{3}\right)$$

Therefore, the currents referred to in the primary winding of the transformer consider the connection in $\triangle$ and also the transformation ratio:

$$a = \frac{N_1}{N_2}$$

$$I_{pri\_r} = a\left(I_{load\_r} - I_{load\_t}\right)$$

$$I_{pri\_s} = a\left(I_{load\_s} - I_{load\_a}\right)$$

$$I_{pri_t} = a\left(I_{load_t} - I_{load_s}\right)$$

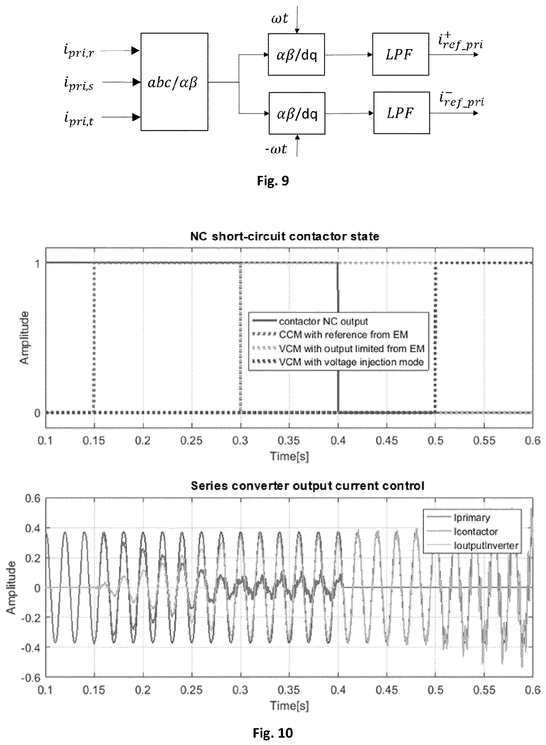

From the current measured in the natural reference frame R-S-T, the Park Transform is made with separation of the positive and negative symmetric components made through a 2nd order low-pass filter as illustrated in **Figure 9.**

These references are considered in the machine's current controller, being subjected to the current vector saturation of the series converter, closing its mesh by the measurement point I.3 (**Figure 3**).

The information presented below refers to the simulation of the DVR electronic voltage regulator, namely the startup sequence and shutdown sequence.

**Figure 10** illustrates the startup sequence of the DVR for a system with a nominal voltage composed of 400V, 230V phase-neutral voltage and mains frequency considered to be 50Hz.

The DVR operation start, still with the NC contactor closed at t=0.15s, is given by the start of the converter in CCM mode to follow the load current. The transfer of the load current circulation from the NC contactor to the DVR series converter is observed. At the time t=0.35s, the series converter started to operate in VCM voltage control mode, but still with the voltage control output limited to the calculated reference of the Energy Meter load current. At the instant t=0.4s, the opening of the NC contactor is given, where a smooth switching of the contactor and the following of the load current are observed. At the time t=0.5s, the voltage compensation mode is introduced, characterized by the inhibition of harmonic compensation for load voltages.

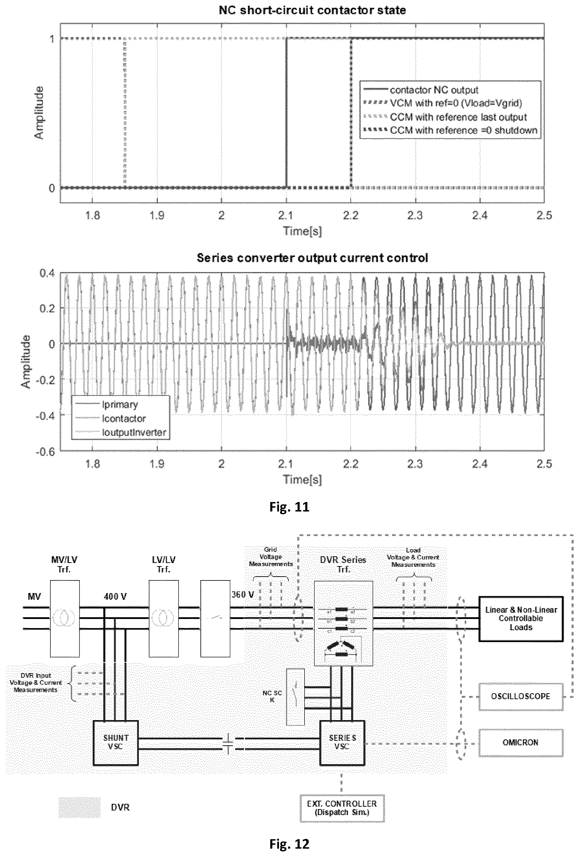

**Figure 11** illustrates the shutdown sequence of the DVR series converter. The instruction is given for the DVR series converter to go into operation with null compensation reference with (Vload=Vgrid). During this period, the operating references for the transition to the current control mode are calculated, at the moment t=1.85s. From the interval considered until the moment of closing of the NC contactor, at the moment t=2.1s, the stability of the load current referred to on the primary side is verified. After feedback of the status of the NC contactor, the switch to zero current reference is made, where the current circulation transfer from the series converter back to the NC contactor is visible.

The information presented below refers to the experimental results, in particular the test setup. The operational topology of the system consists of two converters in a Back2Back topology with an intermediate DC bus, thus establishing the topology of shunt converter and series converter constituting the DVR equipment. The experimental configuration carried out for the electronic voltage regulator test is illustrated in **Figure 12.** The connection to the grid by the series transformer is carried out through a decoupling transformer with tap-changer, in order to allow the system to be tested for different supply voltage levels for the loads (simulators of the distribution network downstream of the distribution Transformer Station). The NC contactor element is introduced to ensure continuity of service and power supply to the load even when the DVR is inoperable. It will act as a 1st line bypass system, internal to the DVR and necessary for the controlled startup and shutdown sequences of the system.

The bypass circuit to the DVR system is not contemplated in this setup since it is not an active element of the system control and, consequently, is not the scope of the functional tests addressed here.

The experimental setup carried out on the testing platform to test the electronic voltage regulator can comprise, for the Back2Back configuration, two nominal 100 kVA converters, for the shunt converter (supplier) and for the series converter. In addition, the DVR's internal protection against overvoltages is introduced by means of a dedicated protection board to activate the NC contactor in the event that overvoltages are observed on the primary side of the series transformer. The DC bus voltage is set to the reference of 670 Vdc, which is well above the minimum limit required to produce the nominal peak voltage of the transformer primary set to 565 Vpk (400 Vrms).

From the point of view of the control layer, according to the project requirement, in addition to the measures and states (remote monitoring of the system), a pair of operational references are provided that will allow the definition of the operational profile of the DVR through a higher-level control and command unit, and in accordance with the control strategies defined at the Transformer Station and respective network node. These references are available by Modbus communication:

Rated voltage;
Compensation percentage [-12, +12] %.

It should also be noted that the range of regulation presented here may be adjusted to other ranges that best suit a given point in the network or application, and for this it is only necessary to properly size the electrical components (e.g., transformer, LCL filters, power stacks, etc.) constituting the equipment.

The information presented below refers to the analysis of test results. In this chapter, the results regarding the validation and operation of the DVR on a test platform will be presented, in particular, within the scope of this document, for the start and stop sequences.

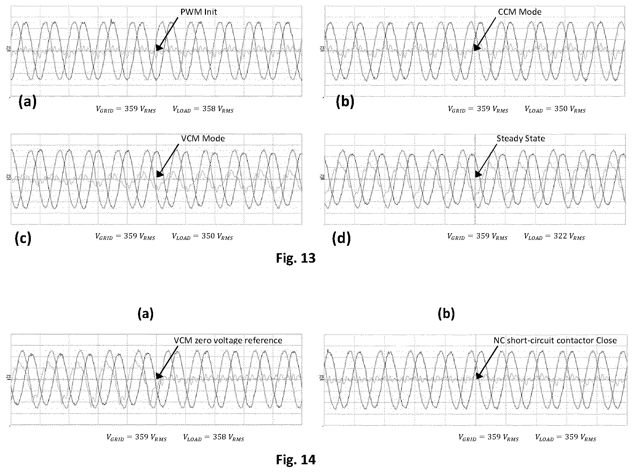

The information presented below refers to the Startup and Shutdown sequence of the DVR. The DVR startup sequence is characterized by the series converter operation start and the consequent opening of the NC contactor of the primary of the transformer. **Figure 13** illustrates the DVR startup sequence considering the system's nonlinear load supply and with the output voltage reference established for 324 Vrms (-10%). In **Figure 13** a), the PWM switching of the series converter is started in order to regulate the current of the converter to supply the load current of the circuit characterized by the CCM operating mode. The load current reference is calculated from the readings taken by the network analyser.

**Figure 13** (b) illustrates the voltage waveforms and is recorded steadily after opening the NC contactor. **Figure 13** c) illustrates the transfer from constant current control CCM to voltage control operating mode and **Figure 13** d) illustrates the waveforms obtained in steady state for voltage control mode.

For the shutdown of the DVR series converter, a zero voltage regulation step is implemented, with the equalization of the mains voltages with the load voltage, in order to allow the closing of the NC contactor without any amplitude or phase jump, and consequent over current scenarios. **Figure 14** a) illustrates the transition from voltage compensation to zero voltage regulation. After 4 seconds, the command to close the NC contactor is given, followed by the transfer from the DVR control to operation in CCM current control. **Figure 14** b) illustrates the closing moment of the NC contactor, where we verify a smooth switching of the contactor without recording a current inrush, thus validating the correct procedure for startup and shutdown of the DVR service, in a controlled manner and without interruption or disturbance in terms of the power supply of the distribution network downstream of the DVR.

Bibliographic References

[1] Nielsen, J. G. (2002). Design and Control of a Dynamic Voltage Restorer. Aalborg: Institut for Energiteknik, Aalborg Universitet

[2] P. Rodriguez, A. Luna, I. Etxeberria, J. R. Hermoso and R. Teodorescu, "Multiple second order generalized integrators for harmonic synchronization of power converters," 2009 IEEE Energy Conversion Congress and Exposition, San Jose, CA, 2009, pp. 2239-2246, doi: 10.1109/ECCE.2009.5316279.

The embodiments described are combinable with each other. The present invention is not, of course, in no way restricted to the embodiments described in this document and a person with average knowledge in the art may foresee many possibilities for modifying it and replacing technical features with equivalent ones, depending on the requirements of each situation, as defined in the appended claims. The following claims define additional embodiments of the present description.

**Claims**

1. Dynamic *Voltage Regulator* (DVR) for series connection in a low-voltage alternating current AC network, to inject a voltage compensation to regulate the voltage in a low-voltage network load to one or more predetermined values, wherein the regulator comprises:

   a series transformer with a primary for energy injection and a secondary for series connection between the low-voltage network and said load where the voltage is intended to be regulated;
   a DC bus, direct current;
   an AC-DC converter, or so-called shunt converter, connected between the low-voltage network and the DC bus, to convert AC from the low-voltage network to DC on the DC bus;
   a DC-AC converter, or so-called series converter, connected between the DC bus and the transformer primary, to convert DC from the DC bus to AC in the primary of the series transformer.

2. Dynamic voltage regulator according to the previous claim comprising a computer processor, configured to switch between the following operating states:

   an active state, wherein the AC-DC converter and the DC-AC converter are active, and wherein the voltage in the low-voltage network load is regulated to the one or more predetermined values;
   a standby state, wherein the AC-DC converter is active and the DC-AC converter is deactivated, and wherein the voltage in the low-voltage network load is not regulated.

3. Dynamic voltage regulator according to the previous claim wherein the computer processor is configured to switch between the following operating states:

   an active state, wherein the AC-DC converter and the DC-AC converter are active, and wherein the voltage of the low-voltage network is regulated to the one or more predetermined values;
   a standby state, wherein the AC-DC converter is active and the DC-AC converter is deactivated, and wherein the voltage in the low-voltage network load is not regulated to the one or more predetermined values;
   an off state, wherein the AC-DC converter and DC-AC converter are deactivated, and wherein the voltage in the low-voltage network load is not regulated.

4. Dynamic voltage regulator according to any of the previous claims comprising a NC short-circuit contactor in the primary of the series transformer, electronically controlled, more in particular wherein the NC short-circuit contactor is a mechanical contactor.

5. Dynamic voltage regulator according to any of the previous claims comprising a switch, electronically controlled, configured to bypass the transformer and converters of the regulator, in particular to establish an alternative electrical circuit for the current flow from the low-voltage network to the low-voltage network load, more particularly wherein the switch is a mechanical contactor.

6. Dynamic voltage regulator according to the previous claim and according to claim 2 or 3, wherein the computer processor is configured to switch between the following operating states:

   an active state, wherein the AC-DC converter and the DC-AC converter are active, and wherein the voltage of the low-voltage network load is regulated;
   a standby state, wherein the AC-DC converter is active and the DC-AC converter is deactivated, and wherein the voltage of the low-voltage network load is not regulated;
   a bypass state, wherein the switch activates a bypass to the transformer and regulator converters, and the readiness state and the bypass state can occur simultaneously; and
   optionally, an off state, wherein the AC-DC converter and DC-AC converter are down, and wherein the voltage of the low-voltage network load is not regulated, and the off state and the bypass state can occur simultaneously.

7. Dynamic voltage regulator according to any of the previous claims comprising one or more capacitors for energy storage connected to the DC bus; and
   a preload circuit for preloading the one or more capacitors by the AC-DC converter.

8. Dynamic voltage regulator according to any of the previous claims wherein the AC-DC converter is further configured to regulate the reactive power in the low-voltage network load and/or to regulate voltage harmonics in the low-voltage network load.

9. Dynamic voltage regulator according to any of the previous claims wherein the series transformer is an injection transformer with galvanic isolation for the distribution network.

10. Dynamic voltage regulator according to any of the previous claims wherein the predetermined values of the low-voltage mains voltage include one or more of: amplitude, frequency and phase of the voltage.

11. Dynamic voltage regulator according to any of the previous claims comprising a computer processor, configured to initiate voltage regulation in the low-voltage network load,
wherein the NC short-circuit contactor on the primary of the series transformer, if any, is previously closed, by following the steps of:

> measuring the value and phase of the current in the low-voltage network load;
> optionally, checking that the voltage measured in the low-voltage network is within a predetermined range and only proceed if the voltage is within that range, in particular a range of $0.85$ pu $\leq$ Us $\leq 1.15$ pu, wherein 1 pu corresponds to the nominal voltage of the low-voltage network and Us is the measured voltage of the low-voltage network;
> activating and adjusting the DC-AC converter for current control on the secondary of the series transformer to the current measured in the low-voltage network load, particularly in a gradual manner;
> when the current of the DC-AC converter stabilizes, adjusting the DC-AC converter for additionally voltage control to a zero voltage in the primary of the series transformer;
> opening the NC short-circuit contactor on the primary of the series transformer, if present;
> setting the DC-AC converter in voltage control to the desired voltage on the secondary of the series transformer to regulate the voltage in the low-voltage network load.

12. Dynamic voltage regulator according to any of the previous claims comprising a computer processor configured to stop voltage regulation in the low-voltage network load,
wherein the NC short-circuit contactor on the primary of the series transformer, if any, is previously opened, by following the steps of:

> setting the DC-AC converter for voltage control to a zero voltage on the primary of the series transformer;
> measuring the value and phase of the current in the low-voltage network load;
> adjusting the DC-AC converter for current control on the secondary of the series transformer to the current measured in the low-voltage network load;
> when the DC-AC converter current stabilizes, closing the NC short-circuit contactor on the primary of the series transformer, if present;
> adjusting the DC-AC converter for current control on the secondary of the series transformer to a zero current, particularly in a gradual manner.

13. Dynamic voltage regulator according to with any of the previous claims comprising a computer processor configured for:

> monitoring the voltage of the low-voltage network;
> if it detects a voltage deviation condition in any of the phases compared to a predefined value for that phase, including under- or over-voltage scenarios compared to the reference value set for each phase, activating voltage regulation by the dynamic voltage regulator in response to the detection of the voltage deviation condition;
> injecting a compensatory voltage in series with the low-voltage network to correct the voltage deviation condition in the low-voltage network load; and
> monitoring the corrected voltage on a dynamic voltage regulator output to ensure that the output voltage is at the set reference value and within acceptable accuracy limits.

14. Dynamic voltage regulator according to any of the previous claims wherein the DVR is configured to be connected in series between the power transformer of the low-voltage network and the LVDB of the distribution transformer station of the low-voltage network load.

15. Method for starting a dynamic voltage regulator of any of the previous claims comprising a computer processor, configured to initiate the regulation of the voltage in the low-voltage network load to the one or more predetermined values, by:

measuring the value and phase of the current in the low-voltage network load;

optionally, checking that the voltage measured in the low-voltage network is within a predetermined range and only proceed if the voltage is within that range, in particular a range of $0.85 \ pu \leq Us \leq 1.15 \ pu$, wherein 1 pu corresponds to the nominal voltage of the low-voltage network and Us is the measured voltage of the low-voltage network;

activating and adjusting the DC-AC converter for current control on the secondary of the series transformer to the current measured in the low-voltage network load, particularly in a gradual manner;

when the current of the DC-AC converter stabilizes, adjusting the DC-AC converter for additionally voltage control to a zero voltage in the primary of the series transformer;

opening the NC short-circuit switch on the primary of the series transformer, if present;

setting the DC-AC converter in voltage control to the desired voltage on the secondary of the series transformer to regulate the voltage in the low-voltage network load.

## Energy Quality

Fig. 1

Fig. 2

Fig. 3

10/0.4kV

50/10kV

DVR

LOAD 1

LOAD 2

LOAD 3

**Fig. 4**

10/0.4kV

50/10kV

DVR

LOAD 1

LOAD 2

LOAD 3

**Fig. 5**

$u_{DVR}$    $i_{load}$

n

$i_{DC}$    $i_{conv}$    $u_{conv}$

$U_{DC}$

1    3

2    4

$i_{diode,2}$    $i_{IGBT,4}$

**Fig. 6**

Start Button ON

Energy Meter Readings

Communication = ON

Inverter Contactor
CLOSE

Inverter Contactor FB = ON

Load Current CCM
Control

Inverter Current = EM reference reading

VCM Control limited
to load current

NC Short-Circuit
Contactor OPEN

NC contactor FB = OFF

VCM Control
Voltage Compensation

End

Fig. 7

```
        ┌─────────────────┐
        │ Start Button OFF │
        └─────────────────┘
                 │
        ┌─────────────────┐
        │   VCM Control   │
        │ zero voltage ref.│
        └─────────────────┘
                 │
              ━━━━━━    Load voltage = Mains voltage
                 │
        ┌─────────────────┐
        │   CCM Control   │
        │ Load current ref.│
        └─────────────────┘
                 │
              ━━━━━━    Inverter Current = Load Current
                 │
        ┌─────────────────┐
        │ NC Short-Circuit │
        │ Contactor CLOSE  │
        └─────────────────┘
                 │
              ━━━━━━    NC contactor FB = ON
                 │
        ┌─────────────────┐
        │   CCM Control   │
        │ zero current ref │
        └─────────────────┘
                 │
              ━━━━━━    Inverter Current = 0
                 │
        ┌─────────────────┐
        │ Inverter Contactor│
        │      OPEN       │
        └─────────────────┘
                 │
             ┌───────┐
             │  End  │
             └───────┘
```

Fig. 8

Fig. 9

Fig. 10

**NC short-circuit contactor state**

**Series converter output current control**

Fig. 11

Fig. 12

**(a)** PWM Init

$V_{GRID} = 359\ V_{RMS}$   $V_{LOAD} = 358\ V_{RMS}$

**(b)** CCM Mode

$V_{GRID} = 359\ V_{RMS}$   $V_{LOAD} = 350\ V_{RMS}$

**(c)** VCM Mode

$V_{GRID} = 359\ V_{RMS}$   $V_{LOAD} = 350\ V_{RMS}$

**(d)** Steady State

$V_{GRID} = 359\ V_{RMS}$   $V_{LOAD} = 322\ V_{RMS}$

**Fig. 13**

**(a)**

**(b)**

VCM zero voltage reference

$V_{GRID} = 359\ V_{RMS}$   $V_{LOAD} = 358\ V_{RMS}$

NC short-circuit contactor Close

$V_{GRID} = 359\ V_{RMS}$   $V_{LOAD} = 359\ V_{RMS}$

**Fig. 14**

## EP 4 687 249 A1

Europäisches
Patentamt
European
Patent Office
Office européen
des brevets

# EUROPEAN SEARCH REPORT

**Application Number**

EP 24 21 7141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 895 521 B (SHANDONG HOTEAM ELECTRICAL CO LTD) 4 June 2024 (2024-06-04) * paragraphs [0043] - [0067]; claims 1-7; figures 2,3 * | 1-15 | INV. H02J3/01 H02J3/12 H02J3/18 H02M5/40 |
| X | KANDIL TAREK ET AL: "Control and Operation of Dynamic Voltage Restorer With Online Regulated DC-Link Capacitor in Microgrid System", CANADIAN JOURNAL OF ELECTRICAL AND COMPUTER ENGINEERING/REVUE CANADIENNE DE GENIE ELECTRIQUE AND INFORMATIQUE, ENGINEERING, USA, vol. 43, no. 4, 1 October 2020 (2020-10-01), pages 331-341, XP011817628, ISSN: 0840-8688, DOI: 10.1109/CJECE.2020.3002855 [retrieved on 2020-10-26] * pages 333-339; figure 9 * | 1,5,7, 14,15 | |
| X | US 2006/229767 A1 (CHU CHIA-CHI [TW] ET AL) 12 October 2006 (2006-10-12) * paragraphs [0014] - [0016], [0108] - [0144]; figures 3,7 * | 1,7,13, 15 | **TECHNICAL FIELDS SEARCHED (IPC)** H02M H02J |
| A | CN 116 316 664 A (SUZHOU SIFANG ZHIDIAN ENERGY TECH CO LTD) 23 June 2023 (2023-06-23) * figure 9 * | 1-15 | |

The present search report has been drawn up for all claims

| Place of search | Date of completion of the search | Examiner |
|---|---|---|
| Munich | 25 April 2025 | Ríos Báez, Abel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 24 21 7141

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2025

| Patent document cited in search report | | Publication date | Patent family member(s) | | Publication date |
|---|---|---|---|---|---|
| CN 117895521 | B | 04-06-2024 | NONE | | |
| US 2006229767 | A1 | 12-10-2006 | TW | I264864 B | 21-10-2006 |
| | | | US | 2006229767 A1 | 12-10-2006 |
| CN 116316664 | A | 23-06-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5469044 A


**Non-patent literature cited in the description**

- **NIELSEN, J. G.** Design and Control of a Dynamic Voltage Restorer.. Institut for Energiteknik, 2002

- **P. RODRIGUEZ** ; **A. LUNA** ; **I. ETXEBERRIA** ; **J. R. HERMOSO** ; **R. TEODORESCU**. Multiple second order generalized integrators for harmonic synchronization of power converters. *IEEE Energy Conversion Congress and Exposition*, 2009, 2239-2246